# EUROPÄISCHE PATENTANMELDUNG

(11) **EP 2 990 988 A1**
(43) Veröffentlichungstag der Anmeldung: **02.03.2016**
(21) Anmeldenummer: 14183070.3
(22) Anmeldetag: 01.09.2014
(51) Int. Cl.: G06F 21/73, H04L 9/32, G06Q 30/00

(54) **Verfahren und Authentifizierungssystem zur Registrierung eines zufälligen Sicherheitsmerkmals**

(71) Anmelder: Authentic Vision GmbH, 5020 Salzburg (AT)
(72) Erfinder: Weiß, Thomas, 5020 Salzburg (AT); Bergmüller, Thomas, 5600 St. Johann im Pongau (AT)
(74) Vertreter: Sonn & Partner Patentanwälte

(57) **Zusammenfassung**

Verfahren und Authentifizierungssystem zur Registrierung eines zufälligen Sicherheitsmerkmals (8) eines Produkts (5) in einer Datenbank (10), anhand eines reproduzierbaren Identifikationsmerkmals (6) des Produkts (5), wobei das Sicherheitsmerkmal (8) mit dem Identifikationsmerkmal (6) verknüpft wird, wobei die Registrierung des zufälligen Sicherheitsmerkmals (8) unter der Bedingung einer positiven vorläufigen Authentizitätsprüfung (15) des Produkts (5) durchgeführt wird, sodass etwaige nachfolgende endgültige Authentizitätsprüfungen des Produkts (5) das registrierte Sicherheitsmerkmal verwenden können.

## Beschreibung

Die Erfindung betrifft ein Verfahren zur Registrierung eines zufälligen Sicherheitsmerkmals eines Produkts in einer Datenbank anhand eines Identifikationsmerkmals des Produkts, wobei das Sicherheitsmerkmal mit dem Identifikationsmerkmal verknüpft wird, und ein Authentifizierungssystem zur Implementierung des Verfahrens mit einer Datenbank, welche Verknüpfungen zwischen Identifikationsmerkmalen und Sicherheitsmerkmalen von Produkten speichert, und mit einem mobilen Lesegerät, welches eingerichtet ist, zur Authentifizierung eines Produkts ein Identifikationsmerkmal und ein zufälliges Sicherheitsmerkmal an dem Produkt zu erfassen.

Das gegenständliche Verfahren dient der Unterscheidung von Originalprodukten und Plagiaten, d.h. vom Urheber des Originalprodukts nicht autorisierten Kopien, und ist somit Teil eines umfassenderen Authentifizierungsverfahrens. In Verbindung mit derartigen Verfahren ist es im Stand der Technik hinlänglich bekannt, optisch erfassbare zufällige Objekteigenschaften des Produkts, welche von Objekt zu Objekt variieren und nicht oder nur schwer reproduzierbar sind, als Sicherheitsmerkmale zu verwenden. Alternativ oder zusätzlich können als Sicherheitsmerkmale auch nachträglich auf die Produkte aufgebrachte und nicht ablösbare zufällige Merkmale verwendet werden. Solche oder vergleichbare Sicherheitsmerkmale werden im Folgenden als zufällige Sicherheitsmerkmale bezeichnet, welche eine durch unautorisierte Dritte nicht oder nur sehr aufwendig reproduzierbare und somit nicht fälschbare Kennzeichnung von Produkten ermöglichen. Als Identifikationsmerkmal wird häufig eine Seriennummer verwendet, welche in der Regel im Zuge der Produktion generiert und auf das Produkt aufgebracht wird und somit im Allgemeinen - im Unterschied zu den zufälligen Sicherheitsmerkmalen - einerseits bereits vor Aufbringung bekannt und andererseits reproduzierbar ist. Das Identifikationsmerkmal ermöglicht eine eindeutige Identifikation eines bestimmten Produkts. Zur Vereinfachung der Authentifizierung kann das Identifikationsmerkmal in Form eines maschinenlesbaren Codes, z.B. als eindimensionaler oder zweidimensionaler Barcode vorliegen, wodurch ein automatisches Einlesen und Verarbeiten des Identifikationsmerkmals erheblich erleichtert wird. Bei der Überprüfung der Authentizität eines Produkts wird in der Regel das Identifikationsmerkmal und das Sicherheitsmerkmal erfasst und das erfasste Sicherheitsmerkmal mit einem in einer (beispielsweise zentralen bzw. zentral aktualisierbaren) Datenbank abgelegten und mit dem Identifikationsmerkmal verknüpften Sicherheitsmerkmal verglichen (bzw. werden genau genommen deren digitale Repräsentationen verglichen). Bei Übereinstimmung wird von der Authentizität des Produkts ausgegangen. Als Datenbank wird in der Regel eine elektronische bzw. computergestützte Datenbank verwendet, welche z.B. auf einem Datenbankserver betrieben wird.

Derartige Authentifizierungsverfahren sind beispielsweise der WO 2007/111548 A1, der GB 2460734 A oder der US 2004/0230528 A1 zu entnehmen. Wie bei den jeweiligen Verfahren die Registrierung der zufälligen Sicherheitsmerkmale in der Datenbank funktioniert, d.h. wie bzw. wann die entsprechenden Datenbankeinträge erstellt werden, wird jedoch im Stand der Technik - wenn überhaupt - nur am Rande erwähnt:
Lediglich die WO 2007/111548 A1 beschreibt ausdrücklich, dass die Materialeigenschaften vorab, z.B. vom Hersteller vor Auslieferung der Produkte, gemessen und in der Datenbank abgelegt werden; die GB 2460734 A erwähnt nur die grundsätzliche Möglichkeit, die Datenbank um neue Einträge zu erweitern, was jedoch - für sich alleine genommen - für eine Datenbank ohnehin selbstverständlich ist; und in der US 2004/0230528 A1 wird die Seriennummer auf Basis der Objektmerkmale generiert, sodass auch hier bereits bei der Herstellung (insbesondere vor der Aufbringung der Seriennummer) eine Verknüpfung zwischen Seriennummer und Objektmerkmalen hergestellt wird.

Bei den bekannten Verfahren muss, weil die zufälligen Sicherheitsmerkmale naturgemäß nicht vorab bekannt sind, somit einer Erfassung der zufälligen Sicherheitsmerkmale beim Urheber bzw. Hersteller der Produkte erfolgen, damit in der Datenbank die für eine spätere Authentifizierung nötigen Verknüpfungen angelegt oder die implizit verknüpften Identifikationsmerkmale oder Signaturen auf die Produkte aufgebracht werden können. D.h. die Registrierung der zufälligen Sicherheitsmerkmale wird vom Urheber bzw. Hersteller der Produkte vorgenommen. Die Erfassung der zufälligen Sicherheitsmerkmale beim Urheber bzw. Hersteller der Produkte ist jedoch in der Praxis nachteilig, da diese eine Anpassung der vorhandenen (Herstellungs-)Prozesse bedingt. So müssen beispielsweise zusätzliche Hochleistungskameras in die Produktionslinie eingetaktet, gegebenenfalls (um den Kameras genügen Zeit für die Erfassung der zufälligen Sicherheitsmerkmale zu geben) die Produktionsgeschwindigkeit gedrosselt oder sogar separate Produktionsschritte eingeführt werden.

Die Aufgabe der vorliegenden Erfindung besteht darin, die obigen Nachteile zu vermeiden und ein Verfahren und ein System vorzuschlagen, welche nötige Änderungen an bestehenden Produktionsprozessen bei der Einführen einer Produktauthentifizierung minimieren ohne jedoch auf die durch zufällige Sicherheitsmerkmale erzielte Fälschungssicherheit verzichten zu müssen.

Gelöst wird diese Aufgabe dadurch, dass die Registrierung des zufälligen Sicherheitsmerkmals unter der Bedingung einer positiven vorläufigen Authentizitätsprüfung des Produkts durchgeführt wird, sodass etwaige nachfolgende endgültige Authentizitätsprüfungen des Produkts das registrierte Sicherheitsmerkmal verwenden können. D.h. die Registrierung des zufälligen Sicherheitsmerkmals, welche - wie eingangs angegeben - im Wesentlichen die Verknüpfung des zufälligen Sicherheitsmerkmals mit einem Identifikationsmerkmal umfasst, wird nur dann durchgeführt, wenn die vorläufige Authentizitätsprüfung die Authentizität des Produkts auf Basis der zu diesem Zeitpunkt zur Verfügung stehenden Informationen bestätigt. Wesentlich für die vorläufige Authentizitätsprüfung ist, dass sie - im Unterschied zur endgültigen Authentizitätsprüfung - ohne vorherige Registrierung des zufälligen Sicherheitsmerkmals funktioniert. Demgegenüber basiert die endgültige Authentizitätsprüfung auf einer Überprüfung der (bereits vorhandenen) Verknüpfung der am überprüften Produkt vorgefundenen Identifikations- und Sicherheitsmerkmale. Die Einführung einer vorläufigen Authentizitätsprüfung bedeutet naturgemäß eine Steigerung des für die Registrierung nötigen Aufwands und erscheint somit zunächst als nachteilig. Der entscheidende Vorteil ergibt sich jedoch aus der dadurch ermöglichten Auslagerung der Registrierung. Aufgrund der Absicherung der Registrierung durch die vorläufige Authentizitätsprüfung muss sie nicht mehr während der Herstellung erfolgen, sondern wird stattdessen nachträglich, vorzugsweise im Rahmen der ersten Authentifizierung des Produkts, durchgeführt. Mit der Registrierung kann aber auch die Erfassung der zufälligen Sicherheitsmerkmale ausgelagert werden, wodurch die Integration in den bestehenden Produktionsprozess erheblich vereinfacht wird, da kein Gerät zur Erfassung beim Urheber benötigt wird. Die Zuverlässigkeit und Sicherheit des Authentifizierungsverfahrens wird durch die Auslagerung nicht oder kaum beeinträchtigt, da die erste Authentifizierung in der Praxis immer durch den Händler und/oder Käufer des Originalprodukts (von dem später allenfalls Kopien angefertigt werden könnten) und in der Regel unter kontrollierten Bedingungen (z.B. direkt beim autorisierten Händler bzw. in dessen Vertriebskette) erfolgt und die vorläufige Authentizitätsprüfung unter diesen Umständen einen mehr als ausreichenden Schutz bietet. Spätere Authentifizierungen greifen ohnehin auf die dann bereits registrierten Sicherheitsmerkmale zurück und profitieren damit unabhängig von den äußeren Umständen von der vollen Fälschungssicherheit der zufälligen Sicherheitsmerkmale.

Dementsprechend wird die Aufgabe bei einem Authentifizierungssystem der eingangs angeführten Art dadurch gelöst, dass das mobile Lesegerät eingerichtet ist, eine vorläufige Authentizitätsprüfung des Produkts auf Basis des erfassten Identifikationsmerkmals auszuführen bzw. zu veranlassen und bei positivem Ausgang der vorläufigen Authentizitätsprüfung eine Registrierung des erfassten zufälligen Sicherheitsmerkmals in der Datenbank auszuführen bzw. zu veranlassen.

Eine einfache und zugleich wirksame vorläufige Authentizitätsprüfung kann darin bestehen, dass die vorläufige Authentizitätsprüfung negativ ausfällt, wenn das Identifikationsmerkmal nicht in der Datenbank registriert ist. Die durch diese Art der Authentizitätsprüfung erzielte Sicherheit beruht auf der Einzigartigkeit des Identifikationsmerkmals sowie dessen Eigenschaft, dass es von einem Fälscher nicht erraten werden kann. Derartige Identifikationsmerkmale können beispielsweise mit Hilfe eines Zufallsgenerators und/oder eines Verschlüsselungsverfahrens generiert werden. Dabei sollte die Anzahl der möglichen Merkmalskombinationen (d.h. die Länge einer Seriennummer bzw. allgemein der Informationsgehalt des Identifikationsmerkmals) weit über der Auflage des jeweiligen Produkts liegen, um einerseits die Einzigartigkeit zu garantieren und andererseits ein zufälliges Erraten eines gültigen (d.h. registrierten) Identifikationsmerkmals zu erschweren. Das auf diese Weise während der Herstellung generierte Identifikationsmerkmal wird einerseits auf ein Produkt aufgebracht und andererseits in der Datenbank registriert, jedoch ohne Verknüpfung mit einem - zu diesem Zeitpunkt noch nicht erfassten - zufälligen Sicherheitsmerkmal. Bei der vorläufigen Authentizitätsprüfung, z.B. während der ersten Authentifizierung, wird das am Produkt aufgebrachte Identifikationsmerkmal ermittelt und in der Datenbank nach einem entsprechenden Eintrag gesucht. Falls das ermittelte Identifikationsmerkmal nicht gefunden wird, handelt es sich bei dem Produkt offenbar um eine Fälschung und die Authentifizierung schlägt fehl und damit auch die Registrierung eines Sicherheitsmerkmals. Falls das ermittelte Identifikationsmerkmal gefunden wird und bereits mit einem zufälligen Sicherheitsmerkmal verknüpft ist, wird eine endgültige Authentizitätsprüfung vorgenommen. Ein potentieller Fälscher müsste daher ein Identifikationsmerkmal eines bereits produzierten aber noch nie authentifizierten Produkts erraten, d.h. zu den Eigenschaften des Identifikationsmerkmals selbst kommt als weitere Sicherheit noch das vergleichsweise enge Zeitfenster für die Registrierung des zufälligen Sicherheitsmerkmals (wobei das Zeitfenster - wie im Folgenden beschrieben - noch zusätzlich eingegrenzt werden kann). Bei der Registrierung des zufälligen Sicherheitsmerkmals wird demzufolge ein existierender Datenbankeintrag des Identifikationsmerkmals ergänzt; insbesondere wird kein neuer Datenbankeintrag für das Identifikationsmerkmal des Produkts angelegt. Die Registrierung des zufälligen Sicherheitsmerkmals ist demzufolge zeitlich gesehen erst nach der Registrierung des Identifikationsmerkmals möglich.

Darüber hinaus ist es vorteilhaft, wenn im Rahmen der vorläufigen Authentizitätsprüfung zusätzliche, mit dem Identifikationsmerkmal assoziierte Informationen, beispielsweise ein Zielmarkt und/oder ein Verkaufszeitraum des Produkts und/oder ein reproduzierbares Sicherheitsmerkmal, berücksichtigt werden, insbesondere in Verbindung mit dem zum Zeitpunkt der laufenden Registrierung aktuellen Zeitpunkt und Aufenthaltsort des Produkts. Solche assoziierten Informationen können beispielsweise mithilfe des Identifikationsmerkmals aus der Datenbank abgerufen werden, wo sie z.B. vom Hersteller während der Herstellung des Produkts und der Registrierung des Identifikationsmerkmals hinterlegt wurden, oder sie können direkt aus dem Identifikationsmerkmal abgeleitet werden, falls sie - z.B. in verschlüsselter Form - darin eingebettet sind. Anhand der zusätzlichen Informationen wird dann die Plausibilität einer ersten Authentifizierung des Produkts unter den ebenfalls bekannten Umständen (d.h. zu einem bekannten Zeitpunkt und gegebenenfalls einem bekannten Ort) ermittelt. Falls eine geringe Plausibilität ermittelt wird, z.B. weil der Ort der Registrierung vom Zielmarkt abweicht oder der Zeitpunkt der Registrierung signifikant außerhalb eines vorgesehenen Verkaufszeitraums liegt, schlägt die vorläufige Authentizitätsprüfung fehl und die Registrierung wird abgebrochen.

Die Sicherheit der vorläufigen Authentizitätsprüfung kann weiter verbessert werden, wenn im Rahmen der vorläufigen Authentizitätsprüfung die Plausibilität des zu registrierenden zufälligen Sicherheitsmerkmals, insbesondere in Abhängigkeit von einem mit dem Identifikationsmerkmal assoziierten Produkttyp oder einer Produktklasse, überprüft wird. Wenn alle möglichen zufälligen Sicherheitsmerkmale eines Typs oder einer Klasse eine gemeinsame Eigenschaft, wie beispielsweise die Zugehörigkeit zu einem Gesamtmuster (d.h. die Sicherheitsmerkmale weisen Teile bzw. Ausschnitten aus dem Gesamtmuster auf) oder ähnliche Mustereigenschaften aufweisen, können die erfassten (unregistrierten) zufälligen Sicherheitsmerkmale auf diese gemeinsame Eigenschaft überprüft werden. Zusätzlich können anhand des assoziierten Produkttyps oder der Produktklasse auch deren gemeinsame, z.B. strukturelle, Merkmale einer Plausibilitätsprüfung, welche einen Teil der vorläufigen Authentizitätsprüfung bildet, unterzogen werden.

Das vorliegende Verfahren zielt insbesondere darauf ab, dass das zu registrierende zufällige Sicherheitsmerkmal mithilfe eines mobilen Lesegeräts, vorzugsweise mithilfe eines Sensors eines handelsüblichen mobilen Endgeräts, wie beispielsweise eines handelsüblichen Smartphones, erfasst wird und das erfasste zufällige Sicherheitsmerkmal vor der Registrierung vom mobilen Lesegerät an die Datenbank übermittelt wird. Das zufällige Sicherheitsmerkmal kann z.B. ein mithilfe einer digitalen Kamera eines mobilen Endgeräts auslesbares zufälliges optisches Sicherheitsmerkmal sein. Bei einem derartigen Authentifizierungssystem, d.h. umfassend eine zentrale Datenbank und mehrere mit der Datenbank kommunizierende mobile Lesegeräte, kann eine zentrale Erfassung der Sicherheitsmerkmale vollständig entfallen. Als Lesegeräte werden bevorzugt ausschließlich bereits vorhandene bzw. weitverbreitete, handelsübliche Endgeräte eingesetzt, sodass keine Anschaffungskosten seitens des Herstellers oder Datenbankbetreibers entstehen. Indem das die Registrierung vornehmende mobile Lesegerät das erfasste zufällige Sicherheitsmerkmal (d.h. die digitale Repräsentation des physikalischen zufälligen Sicherheitsmerkmals) an die Datenbank übermittelt, können in der Folge andere mobile Lesegeräte auf das erfasste zufällige Sicherheitsmerkmal zugreifen oder die Datenbank kann es zu einem späteren Zeitpunkt mit einem von einem anderen mobilen Lesegerät übermittelten erfassten zufälligen Sicherheitsmerkmal vergleichen.

Aufgrund der weiten Verbreitung geeigneter optischer Sensoren und der steigenden Qualität und optischen Auflösung dieser Sensoren ist es besonders günstig, wenn das zu registrierende zufällige Sicherheitsmerkmal durch optisch erfassbare Eigenschaften gebildet ist und im Rahmen der Registrierung optisch erfasst wird. Optische Eigenschaften ermöglichen zudem eine hohe Informationsdichte und sind zugleich wirtschaftlich herstellbar (z.B. im Vergleich zu elektronischen Sicherheitsmerkmalen) und robust gegen mechanische oder thermische Beschädigungen oder Verfälschungen.

Um im Zusammenhang mit der Verwendung von mobilen Lesegeräten fehlerhafte Authentifizierungen (z.B. durch parallel genutzte andere mobile Lesegeräte) während der Durchführung des vorliegenden Verfahrens zu vermeiden, ist es günstig, wenn das erfasste zufällige Sicherheitsmerkmal (erst) nach der positiven vorläufigen Authentizitätsprüfung in die Datenbank eingetragen und mit dem Identifikationsmerkmal verknüpft wird. Die vorläufige Authentizitätsprüfung kann sowohl lokal am mobilen Lesegerät oder auch zentral in der Datenbank (z.B. am Datenbankserver) stattfinden. Wenn die vorläufige Authentizitätsprüfung am mobilen Lesegerät durchgeführt wird, kann das erfasste zufällige Sicherheitsmerkmal z.B. erst nach einer positiven vorläufigen Authentizitätsprüfung an die Datenbank übermittelt werden. Wenn die vorläufige Authentizitätsprüfung in der Datenbank bzw. von einem zentralen Server durchgeführt wird, kann z.B. das Identifikationsmerkmal und das erfasste zufällige Sicherheitsmerkmal zugleich an die Datenbank bzw. den Server übermittelt werden.

Bevorzugt wird die vorläufige Authentizitätsprüfung lokal am mobilen Lesegerät durchgeführt. Dadurch kann eine übermäßige Rechenbelastung des zentralen Servers durch möglicherweise aufwendige Vergleiche komplizierter und umfassender Sicherheitsmerkmale vermieden werden. Um dennoch eine höchstmögliche Sicherheit der vorläufigen Authentizitätsprüfung gegen Manipulationen zu gewährleisten, kann die vorläufige Authentizitätsprüfung auch als zweistufiges Verfahren, mit einer Überprüfung lokal am Lesegerät und - im Fall eines positiven Ausgangs - einer weiteren Überprüfung bzw. Kontrolle zentral am Server ausgeführt sein.

Die eingangs beschriebenen Vorteile des vorliegenden Verfahrens für die Vereinfachung und Beschleunigung eines Herstellungsprozesses können im vollen Umfang genutzt werden, wenn das Identifikationsmerkmal vorab, insbesondere während oder vor der Produktion des Produkts, generiert, auf das Produkt aufgebracht und in der Datenbank registriert wird. Wenn das Identifikationsmerkmal vor der Produktion generiert wird, kann es beispielsweise mit Hilfe eines Datenträgers der Produktion zur Verfügung gestellt werden. Eine Erfassung des Identifikationsmerkmals während der Herstellung ist somit für die Registrierung des Identifikationsmerkmals nicht erforderlich, da dieses bereits vor der Aufbringung auf das Produkt bekannt ist. Durch die Registrierung des Identifikationsmerkmals in der Datenbank während der Produktion kann das Identifikationsmerkmal als Komponente der vorläufigen Authentizitätsprüfung verwendet werden und es wird sichergestellt, dass nur Identifikationsmerkmale von tatsächlich produzierten Produkten in der Datenbank registriert sind. Damit wird das Zeitfenster, in dem das Identifikationsmerkmale erraten und eine Fälschung damit versehen werden könnte weiter eingegrenzt.

Weiters ist es günstig, wenn das Identifikationsmerkmal durch einen auf das Produkt aufgebrachten Identifikationscode wiedergegeben wird. Derartige Identifikationscodes können sehr günstig während oder bereits vor der Produktion der eigentlichen Produkte hergestellt und gegebenenfalls für verschiedenartigste Produkte verwendet werden. Der Identifikationscode kann beispielsweise mittels eines Klebeetiketts aufgeklebt oder bei geeigneten Produktoberflächen direkt aufgedruckt werden.

Der Identifikationscode kann besonders einfach, insbesondere auch automatisch, optisch eingelesen und verarbeitet werden, wenn der Identifikationscode das Identifikationsmerkmal in einem maschinenlesbaren Format kodiert aufweist, beispielsweise als eindimensionalen Strichcode oder als 2D-Code. Derartiger Codes können mit handelsüblichen und weit verbreiteten optischen Sensoren verarbeitet werden. Insbesondere können bei derartigen Codes - welche als solche ohne Weiteres erkannt und verwendet werden - zusätzliche Informationen und teilweise Instruktionen betreffend das Authentifizierungssystem integriert werden, sodass eine automatische Benutzerführung durch eine vorläufige und/oder endgültige Authentizitätsprüfung nach Erfassung und Erkennung des Identifikationscodes (wofür - wie gesagt - keine besonderen technischen Vorkehrungen nötig sind) erzielt werden kann.

Die vorliegende Erfindung wird anhand der folgenden Ausführungsbeispiele, auf die sie jedoch nicht beschränkt ist, und unter Bezugnahme auf die Zeichnungen noch weiter erläutert. Die Zeichnungen zeigen im Einzelnen:
Fig. 1 ein schematisches Verhaltensdiagramm eines Authentifizierungssystems und -Verfahrens gemäß dem Stand der Technik; und
Fig. 2 ein schematisches Verhaltensdiagramm eines Authentifizierungssystems und -Verfahrens gemäß der vorliegenden Erfindung.

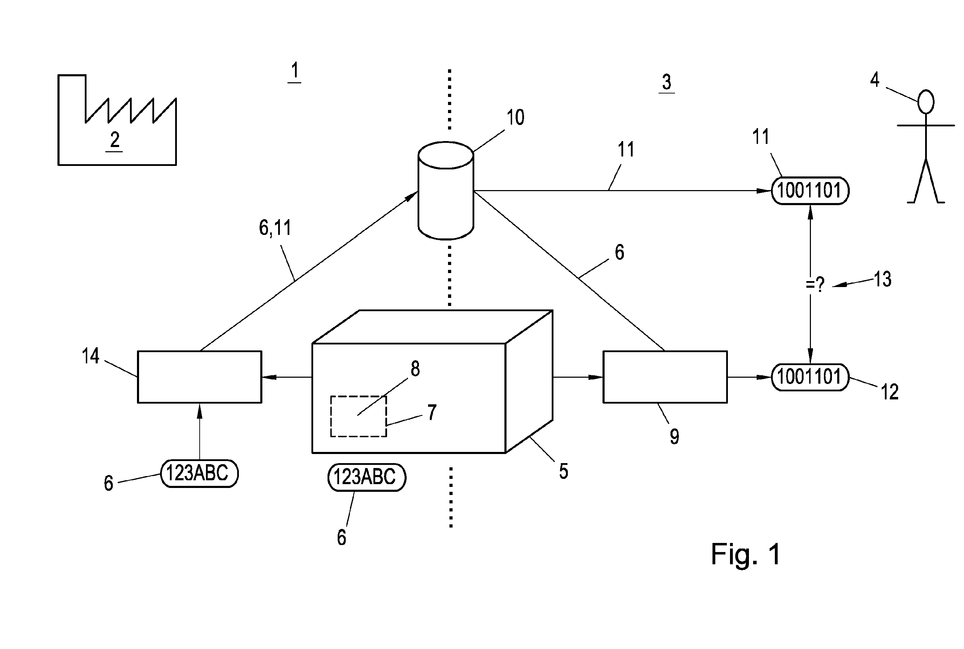

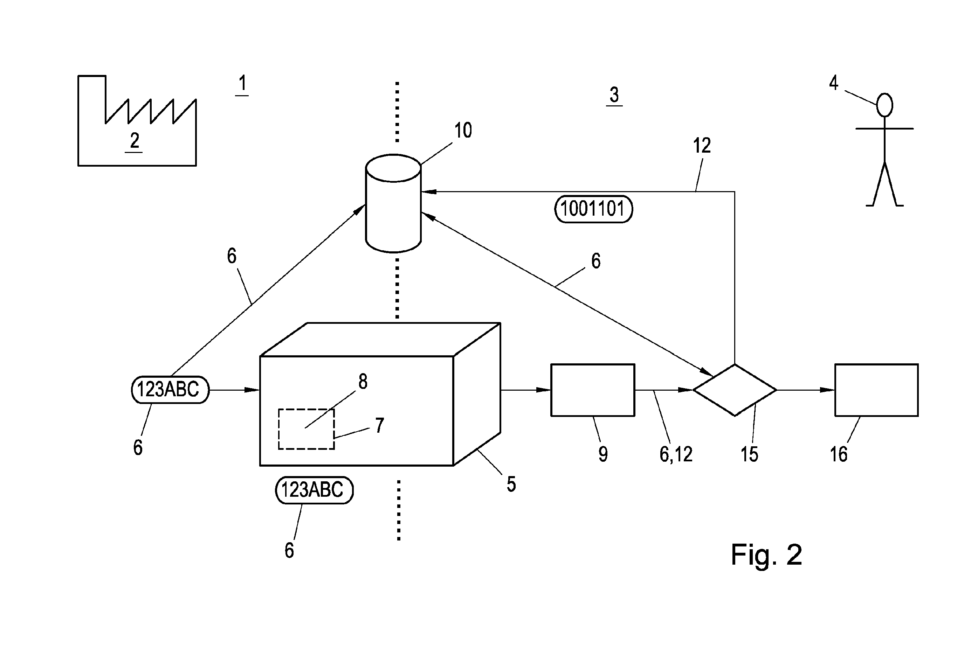

In den Diagrammen in Fig. 1 und 2 ist auf der linken Seite, der Herstellerseite 1 das Verhalten des Herstellers 2 und auf der rechten Seite, der Anwenderseite 3 das Verhalten des Anwenders 4 dargestellt. In beiden Fällen soll die Authentizität eines vom Hersteller 2 erzeugten Produktes 5 durch den Anwender 4 überprüfbar sein bzw. überprüft werden können. Das Produkt 5 ist hierfür mit einem Identifikationsmerkmal 6 in Form einer Seriennummer oder eines ID-Codes versehen und weist in einem Bereich 7 seiner Oberfläche zufällige Sicherheitsmerkmale 8 (z.B. zufällig angeordnete Materialteile, zufällig aufgebrachte Färbungen, eine zufällige Materialstruktur, zufällige Ausschnitte aus einer Hologrammfolie, etc.) auf. Die zufälligen Sicherheitsmerkmale 8 sind mittels eines Anwender-Lesegeräts 9 des Anwenders 4 optisch erfassbar. Abgesehen von den Merkmalen am Produkt 5 selbst, d.h. zumindest dem Identifikationsmerkmal 6 und dem zufälligen Sicherheitsmerkmal 8, können vom Hersteller 2 zusätzlich über eine vom Produkt 5 unabhängige zentrale Datenbank 10 Informationen an den Anwender 4 übermittelt werden.

Die endgültige Authentizitätsprüfung des Produkts 5 kann durch Wiedererkennung der spezifischen Merkmale, d.h. zumindest des Identifikationsmerkmals 6 und des zufälligen Sicherheitsmerkmals 8, durchgeführt werden. Hierfür wird ein in der Datenbank 10 gespeichertes digitales Abbild 11 der Sicherheitsmerkmale 8 mit einem digitalen Abbild 12 der physisch vorhandenen Sicherheitsmerkmale 8 verglichen 13. Im dargestellten Anwendungsfall werden die Merkmale des Produkts 5 durch optisch erfassbare Eigenschaften gebildet. Ein bekanntes Beispiel hierfür ist die Überprüfung von Fingerabdrücken. Der Prozess der Speicherung der Sicherheitsmerkmale 8 (bzw. deren Abbild 11) wird als Registrierung sowie der Prozess des späteren Vergleichs 13 als Authentifizierung bezeichnet. Im Stand der Technik (Fig. 1) werden die Sicherheitsmerkmale 8 digitalisiert und in Verbindung mit dem Identifikationsmerkmal 6 in einer Datenbank abgelegt und somit registriert. Dafür wird seitens des Herstellers 2 ein Hersteller-Lesegerät 14 benötigt, welches die Erfassung und Digitalisierung der Sicherheitsmerkmale 8 vornimmt. Zur Registrierung wird das digitale Abbild 11 vom Hersteller-Lesegerät 14 zusammen mit dem Identifikationsmerkmal 6 an die Datenbank 10 übermittelt und dort abgespeichert, wobei das digitale Abbild 11 des Sicherheitsmerkmals 8 mit dem Identifikationsmerkmal 6 verknüpft wird. Zur Authentifizierung wird seitens des Anwenders 4 das Identifikationsmerkmal 6, z.B. mittels eines Anwender-Lesegeräts 9 erfasst und eine Abfrage mit dem Identifikationsmerkmal 6 an die Datenbank 10 übermittelt. Falls eine entsprechende Kombination registriert ist, beantwortet die Datenbank 10 die Abfrage unter Angabe des registrierten und mit dem erhaltenen Identifikationsmerkmal 6 verknüpften digitalen Abbilds 11 des Sicherheitsmerkmals 8. Dieses wird mit dem von dem Anwender-Lesegerät 9 angefertigten digitalen Abbild 12 des am Produkt 5 vorgefundenen Sicherheitsmerkmals 8 verglichen 13 um die Authentizität des Produkts 5 festzustellen. Bei dem in Fig. 1 dargestellten Verfahren ist somit für die Registrierung des Sicherheitsmerkmals 8, d.h. für die Ablegung eines digitalen Abbilds 11 des Sicherheitsmerkmals 8 und die Verknüpfung mit dem Identifikationsmerkmal 6, ein seitens des Herstellers 2 Hersteller-Lesegerät 14 erforderlich. Die für die Registrierung nötigen Schritte müssen in den Produktionsprozess integriert werden bzw. jedenfalls vom Hersteller durchgeführt werden und verursachen somit zusätzliche Kosten für jedes hergestellte Produkt.

Das in Fig. 2 gezeigte erfindungsgemäße Verfahren und System kommt demgegenüber ohne eine Hersteller-Lesegerät 14 aus. Hier wird seitens des Herstellers 2 nur das - generierte und somit ohnehin bekannte - Identifikationsmerkmal 6, gegebenenfalls mit Zusatzinformationen betreffend den Zielmarkt, Verkaufszeitraum, Produkttyp oder die Produktklasse, an die Datenbank 10 übermittelt und dort abgelegt. Die Registrierung des Sicherheitsmerkmals 8 findet stattdessen auf der Anwenderseite 3 statt. Im gezeigten Fall wird die Registrierung während der ersten Authentifizierung durchgeführt. Dabei wird anstelle einer endgültigen Authentizitätsprüfung mit dem Vergleich 13 der digitalen Abbilder 11, 12 eine vorläufige Authentizitätsprüfung 15 durchgeführt. Dabei wird mittels des Anwender-Lesegeräts 9 das digitale Abbild 12 des Sicherheitsmerkmals 8 und das Identifikationsmerkmal 6 des Produkts 5 erfasst und der vorläufigen Authentizitätsprüfung 15 zugeführt. Anhand des Identifikationsmerkmals 6 werden anschließend etwaige dort gespeicherte Zusatzinformationen für die vorläufige Authentizitätsprüfung 15 aus der Datenbank 10 abgefragt. Falls das Identifikationsmerkmal 6 in der Datenbank 10 nicht registriert ist, ist es - und damit auch das Produkt 5 - offenbar nicht authentisch und die vorläufige Authentizitätsprüfung 15 liefert ein negatives Ergebnis, d.h. das Produkt 5 ist eine Fälschung 16. Andernfalls, d.h. wenn das Identifikationsmerkmal 6 registriert ist, wird optional anhand der von der Datenbank 10 erhaltenen Zusatzinformationen eine Plausibilitätsprüfung vorgenommen. Wenn diese positiv ausgeht, liefert die vorläufige Authentizitätsprüfung 15 insgesamt ein positives Ergebnis und es wird angenommen, dass das Produkt 5 ein Originalprodukt ist. Ausgehend von dieser Erkenntnis wird anschließend das Sicherheitsmerkmal 8 bzw. dessen digitales Abbild 12 an die Datenbank 10 übermittelt und dort registriert. Die Datenbank 10 speichert das vom Anwender-Lesegerät 9 erfasste digitale Abbild 12 ab und verknüpft es mit dem zuvor übermittelten Identifikationsmerkmal 6. Bei nachfolgenden Authentifizierungen desselben Produkts 5 kann dementsprechend eine endgültige Authentizitätsprüfung wie in Fig. 1 gezeigt anhand der registrierten Merkmale 6, 12 vorgenommen werden.

Die seitens des Anwenders durchzuführenden Schritte zur Registrierung können daher allgemein folgendermaßen zusammengefasst werden, wobei die Reihenfolge der Schritte auch abweichen kann:
a) Ermitteln eines zufälligen Sicherheitsmerkmals des Produkts;
b) Ermitteln eines Identifikationsmerkmals des Produkts;
c) Abfragen eines das Identifikationsmerkmal umfassenden Datensatzes einer Datenbank;
d) Falls ein entsprechender Datensatz gefunden wurde und dieser unvollständig ist, Durchführung einer vorläufigen Authentizitätsprüfung auf Basis des Identifikationsmerkmals und/oder zusätzlicher, damit verknüpfter Informationen
e) Falls die vorläufige Authentizitätsprüfung ein positives Ergebnis liefert, Registrierung des zufälligen Sicherheitsmerkmals und Verknüpfung mit dem Datensatz bzw. dem Identifikationsmerkmal.

Falls in Schritt c) kein Datensatz gefunden wurde oder in Schritt e) die vorläufige Authentizitätsprüfung ein negatives Ergebnis liefert, wird die Registrierung abgebrochen und das Produkt als Fälschung angenommen. Falls in Schritt d) der Datensatz vollständig ist, d.h. bereits ein registriertes Sicherheitsmerkmal umfasst, wird eine endgültige Authentizitätsprüfung durchgeführt, wobei zur Feststellung der Authentizität das in Schritt a) ermittelte Sicherheitsmerkmal mit dem registrierten Sicherheitsmerkmal verglichen wird.

## Patentansprüche

1. Verfahren zur Registrierung eines zufälligen Sicherheitsmerkmals (8) eines Produkts (5) in einer Datenbank (10), anhand eines reproduzierbaren Identifikationsmerkmals (6) des Produkts (5), wobei das Sicherheitsmerkmal (8) mit dem Identifikationsmerkmal (6) verknüpft wird, **dadurch gekennzeichnet, dass** die Registrierung des zufälligen Sicherheitsmerkmals (8) unter der Bedingung einer positiven vorläufigen Authentizitätsprüfung (15) des Produkts (5) durchgeführt wird, sodass etwaige nachfolgende endgültige Authentizitätsprüfungen des Produkts (5) das registrierte Sicherheitsmerkmal verwenden können.

2. Verfahren nach Anspruch 1, **dadurch gekennzeichnet, dass** die vorläufige Authentizitätsprüfung (15) negativ ausfällt, wenn das Identifikationsmerkmal (6) nicht in der Datenbank (10) registriert ist.

3. Verfahren nach Anspruch 1 oder 2, **dadurch gekennzeichnet, dass** im Rahmen der vorläufigen Authentizitätsprüfung (15) zusätzliche, mit dem Identifikationsmerkmal (6) assoziierte Informationen, beispielsweise ein Zielmarkt und/oder ein Verkaufszeitraum des Produkts (5) und/oder ein reproduzierbares Sicherheitsmerkmal, berücksichtigt werden, insbesondere in Verbindung mit dem während der laufenden Registrierung aktuellen Zeitpunkt und Aufenthaltsort des Produkts (5).

4. Verfahren nach einem der Ansprüche 1 bis 3, **dadurch gekennzeichnet, dass** im Rahmen der vorläufigen Authentizitätsprüfung (15) die Plausibilität des zu registrierenden zufälligen Sicherheitsmerkmals (8), insbesondere in Abhängigkeit von einem mit dem Identifikationsmerkmal (6) assoziierten Produkttyp oder einer Produktklasse, überprüft wird.

5. Verfahren nach einem der Ansprüche 1 bis 4, **dadurch gekennzeichnet, dass** das zu registrierende zufällige Sicherheitsmerkmal (8) mithilfe eines mobilen Anwender-Lesegeräts (9), vorzugsweise mithilfe eines Sensors eines handelsüblichen mobilen Endgeräts wie beispielsweise eines handelsüblichen Smartphones, eines Tablet-PCs oder eines mobilen PCs, erfasst wird und das erfasste zufällige Sicherheitsmerkmal (8) vor der Registrierung vom mobilen Anwender-Lesegerät (9) an die Datenbank (10) übermittelt wird.

6. Verfahren nach einem der Ansprüche 1 bis 5, **dadurch gekennzeichnet, dass** das zu registrierende zufällige Sicherheitsmerkmal (8) durch optisch erfassbare Eigenschaften gebildet ist und im Rahmen der Registrierung optisch erfasst wird.

7. Verfahren nach Anspruch 5 oder 6, **dadurch gekennzeichnet, dass** das erfasste zufällige Sicherheitsmerkmal (8) nach der positiven vorläufigen Authentizitätsprüfung (15) in die Datenbank (10) eingetragen und mit dem Identifikationsmerkmal (6) verknüpft wird.

8. Verfahren nach einem der Ansprüche 5 bis 7, **dadurch gekennzeichnet, dass** die vorläufige Authentizitätsprüfung (15) lokal am mobilen Anwender-Lesegerät (9) durchgeführt wird.

9. Verfahren nach einem der Ansprüche 1 bis 8, **dadurch gekennzeichnet, dass** das Identifikationsmerkmal (6) vorab, insbesondere während der Produktion des Produkts (5), generiert, auf das Produkt (5) aufgebracht und in der Datenbank (10) registriert wird.

10. Authentifizierungssystem mit einer Datenbank (10), welche Verknüpfungen zwischen Identifikationsmerkmalen (6) und Sicherheitsmerkmalen (8) von Produkten (5) speichert, und mit einem mobilen Anwender-Lesegerät (9), welches eingerichtet ist, zur Authentifizierung eines Produkts (5) ein Identifikationsmerkmal (6) und ein zufälliges Sicherheitsmerkmal (8) an dem Produkt (5) zu erfassen, **dadurch gekennzeichnet, dass** das mobile Anwender-Lesegerät (9) eingerichtet ist, eine vorläufige Authentizitätsprüfung (15) des Produkts (5) auf Basis des erfassten Identifikationsmerkmals (6) auszuführen bzw. zu veranlassen und bei positivem Ausgang der vorläufigen Authentizitätsprüfung (15) eine Registrierung des erfassten zufälligen Sicherheitsmerkmals (8) in der Datenbank (10) auszuführen bzw. zu veranlassen.

11. Authentifizierungssystem nach Anspruch 10, **dadurch gekennzeichnet, dass** das Identifikationsmerkmal (6) durch einen auf das Produkt (5) aufgebrachten Identifikationscode wiedergegeben wird.

12. Authentifizierungssystem nach Anspruch 11, **dadurch gekennzeichnet, dass** der Identifikationscode das Identifikationsmerkmal in einem maschinenlesbaren Format kodiert aufweist, beispielsweise als eindimensionalen Strichcode oder als 2D-Code.
